# EUROPEAN PATENT SPECIFICATION

(11) **EP 3 672 295 B1**
(45) Date of publication and mention of the grant of the patent: **24.01.2024**
(21) Application number: 19217208.8
(22) Date of filing: 17.12.2019
(51) Int. Cl.: H04W 4/90, H04L 67/00

(54) **FIRE CONTROL CABINET AND FIRE CONTROL SYSTEM**
FEUERKONTROLLSCHRANK UND FEUERKONTROLLSYSTEM
CABINET DE CONTRÔLE DES INCENDIES ET SYSTÈME DE CONTRÔLE DES INCENDIES

(30) Priority: 17.12.2018 CN 201811542035
(43) Date of publication of application: 24.06.2020
(73) Proprietor: Carrier Corporation, Palm Beach Gardens, FL 33418 (US)
(72) Inventor: ZHU, Zhengang, Pudong New Area, Shanghai 201204 (CN); JIA, Zhen, Pudong New Area, Shanghai 201204 (CN); LI, Benliang, Dongchen District, Beijing 100005 (CN); WANG, Hairun, Qinhuangdao Development Zone, Hebei 066000 (CN); WU, Bing, Qinhuangdao Development Zone, Hebei 066000 (CN); WANG, Ji, Qinhuangdao Development Zone, Hebei 066000 (CN); REEVE, Hayden Matane, East Hartford, CT Connecticut 06108 (US)
(74) Representative: Dehns

(56) References cited:
- CN-U- 204 406 250
- US-A1- 2015 142 898
- US-A1- 2018 082 575

## Description

The present application relates to the fire-fighting field, and specifically to a fire control cabinet and a fire control system.

Building fire protection systems are important for ensuring safety of buildings. Therefore, after alarm equipment and fire-fighting equipment are configured and deployed in a building, fire control data should be further written into a local control module of the building as daily used configuration files of the local control module, so that the arrangement in the building can be adjusted based on fire control data, the fire control data can be updated accordingly, and personnel can be arranged to operate appropriate equipment at an appropriate location to carry out fire-fighting operations according to actual needs in the case of an incident. Currently, the fire control data and plan are generally compiled in a workshop of the supplier of the fire-fighting equipment, and then personnel from the workshop carries a computer to the target building, connects the computer to the local control module by using a data cable, and writes the fire control data into the local control module. This process is timeconsuming and labor-consuming for large target buildings that are far away from the workshop or have a large quantity of fire-fighting equipment.

US 2015/142898 A1 discloses an alarm panel configuration system for facilitating cloud-based configuration of the alarm panel.

US 2018/0082575 discloses building safety system architecture, methods and mediums including receiving substantially continuous heart-beat communications from a plurality of safety control devices over a packet data network.

CN 204406250 U discloses a switch cabinet with a monitoring function.

In view of this, the present application provides a fire control cabinet, a fire control system and a mobile communication terminal, to effectively solve or at least alleviate one or more of the above-mentioned and other problems in the prior art.

In a first aspect, the present invention provides a fire control cabinet as claimed in claim 1.

Optionally, the fire control data includes an equipment type, equipment code, and equipment location of alarm equipment and/or fire-fighting equipment.

Optionally, the wireless communication module includes a Bluetooth module and/or a WIFI module.

Optionally, a communication process of the wireless communication module is encrypted by using an AES-CCM algorithm.

Optionally, the wireless communication module establishes a connection with the mobile communication terminal after verification using a TOTP token algorithm.

Optionally, the fire control data interacted between the local control unit and the cloud as well as the mobile communication terminal is encrypted by using an TLS-128 algorithm.

A second aspect of the present invention further provides a fire control system as claimed in claim 7.

Optionally, the fire control data uploaded to the cloud is encrypted by using an AES-128 algorithm and is signed with a micro ECC digital signature.

Optionally, the cloud authenticates the mobile communication terminal by using a phone number.

Optionally, the cloud has an abnormal detection module configured to define the mobile communication terminal as abnormal when the phone number corresponding to the mobile communication terminal changes.

Also described herein is a mobile communication terminal for the fire control system, wherein the mobile communication terminal can communicate with the cloud and the local control unit of the fire control system respectively, so that the mobile communication terminal can upload or download fire control data from the cloud, and the local control unit can store the fire control data in the mobile communication terminal or acquire the fire control data from the mobile communication terminal. This mobile communication terminal is not part of the claimed invention but its description is considered useful for understanding the background of the invention.

With the fire control cabinet and the fire control system according to the present application, the fire control data interaction between the local control unit and a remote fire-fighting service provider service system is achieved by means of the mobile communication terminal and the cloud, so that the local control unit can clearly learn the local fire control data, adjust the arrangement in the building based on fire control data, update the fire control data accordingly, and thereby achieving more convenient and efficient fire prevention and fire-fighting deployment.

The technical solutions of the present application will be further described in detail below with reference to the accompanying drawings and embodiments. However, it should be understood that these accompanying drawings are designed for the purpose of explaining rather than limiting the present application. In addition, unless otherwise stated, these accompanying drawings are only intended to conceptually illustrate the structural constructions described herein, and are not necessarily drawn to scale.
FIG. 1 is a schematic diagram of a fire control cabinet.
FIG. 2 is a schematic diagram of a fire control system.

The present application will now be described more fully hereinafter with reference to the accompanying drawings, which show examples of the present application. However, the present invention may be embodied in many different forms and should not be construed as being limited to the examples set forth herein. Rather, these examples are provided so that this disclosure will be thorough and complete and the concept of the present application can fully be conveyed to those skilled in the art.

Although the features of the present application are disclosed in connection with several examples or one of the examples, such features may be combined with one or more other features of other implementations/examples as long as the combination is desirable or beneficial for any given or identifiable function.

Several functional entities may be mentioned herein, which do not necessarily need to correspond to physically or logically independent entities. These functional entities may be implemented in software, or implemented in one or more hardware modules or integrated circuits, or implemented in different processing devices and/or microcontroller devices.

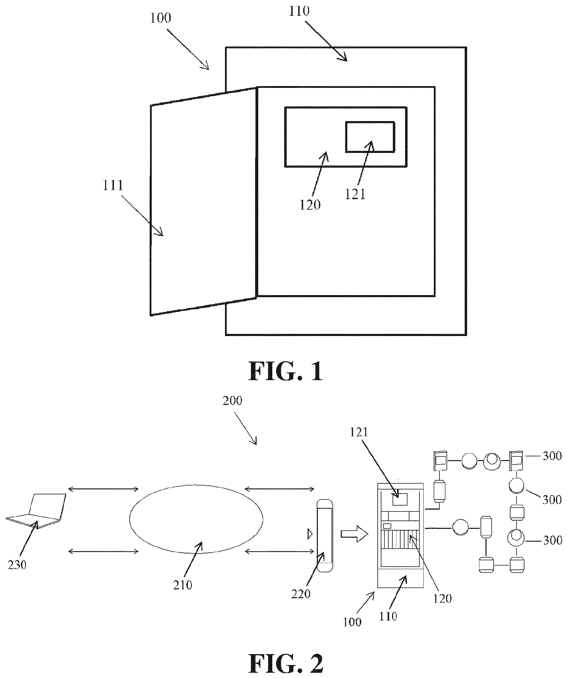

First, referring to FIG. 1, a fire control cabinet 100 is provided. The fire control cabinet 100 includes an openable and closable control cabinet body 110 and a local control unit 120 disposed inside the control cabinet body 110. The local control unit 120 is capable of storing fire control data in a cloud or acquiring fire control data from a cloud by using a mobile communication terminal. In the fire-fighting field, with this configuration, fire control data interaction between the local control unit 120 and a remote fire-fighting service provider service system can be achieved by means of the mobile communication terminal and the cloud, so that the local control unit 120 can quickly and conveniently learn the local fire control data, adjust the arrangement in the building based on fire control data, update the fire control data accordingly, and thereby achieving more convenient and efficient fire prevention and fire-fighting deployment.

The fire control data mentioned herein includes an equipment type, equipment code, and equipment location of alarm equipment and/or fire-fighting equipment. In this way, the local control unit 120 can clearly learn the fire-fighting deployment in the corresponding building to facilitate the adjustment for the equipment, the local control unit 120 also can implement a corresponding function based on the function and location of the equipment, for example, implement a fire alarm function by using temperature sensors and smoke sensors on a particular floor. In addition, the local control unit 120 can conveniently arrange fire-fighters or workers in the building to go to the corresponding location and acquire corresponding fire-fighting equipment to execute a fire-fighting operation, for example, arrange personnel to go to a particular room or aisle location on a certain floor and acquire corresponding dry powder extinguishers to execute a fire-fighting operation.

For the transmission process of the fire control data, specifically, the local control unit 120 includes a wireless communication module 121, and may use the wireless communication module 121 to store the fire control data in the mobile communication terminal or acquire the fire control data from the mobile communication terminal. More specifically, the wireless communication module 121 may include a Bluetooth module or a WIFI module to implement the wireless communication function. This configuration provides a convenient, reliable data transmission mode to ensure a stable high-rate transmission of large volume of data.

In addition, considering particularity, sensitivity and importance of the fire control data, data security and reliability are very important. Therefore, the present invention provides several security means of data protection from both the communication and physical aspects, which will be exemplified as follows.

Firstly, in the physical aspect, the wireless communication module 121 is associated with a cabinet door 111 of the control cabinet body 110. In this case, when the cabinet door 111 is in open position, the associated wireless communication module 121 is caused to keep working normally; when the cabinet door 111 is in closed position, the associated wireless communication module 121 is caused to stop working. More specifically, the cabinet door 111 of the control cabinet body 110 is associated with a switch in a power supply circuit of the wireless communication module 121 e.g. by using a mechanical structure. In this case, when the cabinet door 111 is in open position, the corresponding mechanical structure actuates the switch to turn on the power supply circuit, so that the wireless communication module 121 works normally; when the cabinet door 111 is in closed position, the corresponding mechanical structure causes the switch to disconnect the power supply circuit, so that the wireless communication module 121 stops working. This configuration ensures that no data can be interacted when the control cabinet body 110 is closed, thereby preventing malicious or unintentional access to the local control unit 120 of the fire control cabinet 100 and writing of data thereto. The fire control data can be written only in the presence of a physical key of the fire control cabinet 100 and the corresponding mobile communication terminal that has passed verification in the communication aspect, thereby ensuring security.

Secondly, in the communication aspect, a communication process of the wireless communication module 121 is encrypted by using an AES-CCM algorithm; and the wireless communication module 121 may further establish a connection with the mobile communication terminal after verification using a TOTP token algorithm, so as to ensure security of the communication process.

In addition, the mobile communication terminal and the cloud mentioned in this embodiment are both objects that can interact with the local control unit 120 after being authorized by password login, a verification code received by the communication terminal, or other means. Only after being authorized can the mobile communication terminal or the cloud be considered to be the mobile communication terminal and the cloud of the present application. A fire control system 200 including such features will be described below by way of example.

Further, referring to FIG. 2, a fire control system 200 is further provided. The fire control system 200 includes: a cloud 210 configured to upload and download fire control data that has been configured; a mobile communication terminal 220 configured to download the fire control data from the cloud 210; and a local control unit 120 configured to store the fire control data in the mobile communication terminal 220 or acquire the fire control data from the mobile communication terminal 220. This configuration provides a complete fire control system 200 that can perform data management and interaction. In the fire-fighting field, with this configuration, the fire control data interaction between the local control unit 120 and a remote fire-fighting service provider service system can be achieved by means of the mobile communication terminal 220 and the cloud 210, so that the local control unit 120 can quickly and conveniently learn the local fire control data, adjust the arrangement in the building based on fire control data, update the fire control data accordingly, and thereby achieving more convenient and efficient fire prevention and fire-fighting deployment.

The fire control data mentioned herein includes an equipment type, equipment code, and equipment location of alarm equipment 300 and fire-fighting equipment (not shown). In this way, the local control unit 120 can clearly learn the fire-fighting deployment in the corresponding building to facilitate the adjustment for the equipment, the local control unit 120 also can implement a corresponding function based on the function and location of the equipment, for example, implement a fire alarm function by using temperature sensors and smoke sensors on a particular floor. In addition, the local control unit 120 can conveniently arrange fire-fighters or workers in the building to go to the corresponding location and acquire corresponding fire-fighting equipment to execute a fire-fighting operation, for example, arrange personnel to go to a particular room or aisle location on a certain floor and acquire corresponding dry powder extinguishers to execute a fire-fighting operation.

For the transmission process of the fire control data, specifically, the local control unit 120 includes a wireless communication module 121, and may use the wireless communication module 121 to store the fire control data in the mobile communication terminal 220 or acquire the fire control data from the mobile communication terminal 220. More specifically, the wireless communication module 121 may include a Bluetooth module or a WIFI module to implement the wireless communication function. This configuration provides a convenient, reliable data transmission mode to ensure a stable high-rate transmission of large volume of data.

In addition, considering particularity, sensitivity and importance of the fire control data, data security and reliability are very important. Therefore, the present invention provides several security means of data protection from both the communication and physical aspects, which will be exemplified as follows.

Firstly, similarly, in the physical aspect, the wireless communication module 121 is associated with a cabinet door 111 of the control cabinet body 110. In this case, when the cabinet door 111 is in open position, the associated wireless communication module 121 is caused to keep working normally; when the cabinet door 111 is in closed position, the associated wireless communication module 121 is caused to stop working. More specifically, the cabinet door 111 of the control cabinet body 110 is associated with a switch in a power supply circuit of the wireless communication module 121 e.g. by using a mechanical structure. In this case, when the cabinet door 111 is in open position, the corresponding mechanical structure actuates the switch to turn on the power supply circuit, so that the wireless communication module 121 works normally; when the cabinet door 111 is in closed position, the corresponding mechanical structure causes the switch to disconnect the power supply circuit, so that the wireless communication module 121 stops working. This configuration ensures that no data can be interacted when the control cabinet body 110 is closed, thereby preventing malicious or unintentional access to the local control unit 120 of the fire control cabinet 100 and writing of data thereto. The fire control data can be written only in the presence of a physical key of the fire control cabinet 100 and the corresponding mobile communication terminal 220 that has passed verification in the communication aspect, thereby ensuring security.

Secondly, in the communication aspect, communication between the wireless communication module 121 of the local control unit 120 and the mobile communication terminal 220, communication between the mobile communication terminal 220 and the cloud 210, and communication between the cloud 210 and a workshop of a service provider of the fire control data are included. The security and data integrity of any communication process need to be ensured, in order to ensure the validity of data finally written into the local control unit 120. Based on this, for the communication between the wireless communication module 121 and the mobile communication terminal 220, a communication process of the wireless communication module 121 is encrypted by using an AES-CCM algorithm; and the wireless communication module 121 may further establish a connection with the mobile communication terminal 220 after verification using a TOTP token algorithm, so as to ensure security of the communication process. In addition, for the communication between the mobile communication terminal 220 and the cloud 210, the cloud 210 may be configured to authenticate the mobile communication terminal 220 by using a phone number, for example, by receiving an SMS message or a voice verification code. Based on this, the cloud 210 may further include an abnormal detection module configured to define the mobile communication terminal 220 as abnormal when the phone number corresponding to the mobile communication terminal 220 changes, so as to further control the verification process. Moreover, for the communication between the cloud 210 and a remote end 230 of the service provider of the fire control data, the fire control data uploaded to the cloud 210 may be encrypted by using an AES-128 algorithm and signed with a micro ECC digital signature. In addition, optionally, the fire control data interacted between the cloud 210, the mobile communication terminal 220, and the local control unit 120 may further be encrypted by using a TLS-128 algorithm.

Although not shown in the drawings, a mobile communication terminal used in the fire control system according to any of the above mentioned examples or their combination is further provided. Specifically, corresponding APP can be provided in the mobile communication terminal for logging in, verification and data interaction. In addition, a website can also be provided in the mobile communication terminal for logging in, verification and data interaction, thus establishing a safe and reliable data communication between the cloud and the local control unit.

Moreover, as will be understood by those skilled in the art, the aspects of the present application can be embodied as a system, method, or computer program product. Thus, the aspects of the present application can take the form of an entirely hardware implementation, an entirely software implementation (including firmware, resident software, microcode, etc.), or software plus hardware implementations which can generally referred to herein as "services," "circuits," "circuitry," "modules," and/or "processing systems.". Furthermore, the aspects of the present application can take the form of a computer program product embodied in one or more computer readable media having computer readable program code embodied thereon.

Any combination of one or more computer readable media can be utilized with a computer program stored thereon that can be executed by a processor to implement the methods and steps in any one or combination of the foregoing examples. The computer readable medium can be a computer readable signal medium or a computer readable storage medium. The computer readable storage medium can be, for example, but not limited to, an electronic, magnetic, optical, electromagnetic, infrared, or semiconductor system, apparatus, or device, or any suitable combination of the foregoing. More specific examples (nonexhaustive list) of computer readable storage media will include the following: electrical connections with one or more wires, portable computer disks, hard disks, random access memory (RAM), read only memory (ROM), erasable programmable read only memory (EPROM or flash memory), optical fiber, compact disc read only memory (CD-ROM), optical storage device, magnetic storage device, or any suitable combination of the foregoing. In the context of this document, a computer readable storage medium may be any tangible medium that can contain or store for use by or in connection with an instruction execution system, apparatus, or device.

Program code and/or executable instructions embodied on a computer readable medium can be transmitted using any suitable medium, including but not limited to wireless, wired, optical fiber cable, RF, etc., or any suitable combination of the foregoing.

Computer program code for implementing operations of the aspects of the present application can be written in any combination of one or more programming languages, including object-oriented programming languages such as Java, C#, C++, etc., and conventional programming languages, such as "C" programming language or similar programming language. The program code may be executed entirely on the user's computer (device), partly on the user's computer, as a stand-alone software package, partly on the user's computer and partly on the remote computer, or entirely on the remote computer or server. In the latter case, the remote computer can be connected to the user's computer via any type of network, including a local area network (LAN) or wide area network (WAN), or can be connected to an external computer (e.g., using an Internet service provider via the Internet).

The computer program instructions can be provided to a processor of a general purpose computer or a processor of a special purpose computer, such as an image processor or other programmable data processing device, to produce a machine, so that the instructions executed by the processor or other programmable data processing device of the computer creates a manner of implementing the functions/actions specified in one or more blocks in the flowcharts and/or block diagrams.

The computer program instructions can also be loaded onto a computer, other programmable data processing device or other device to cause a series of operational steps to be performed on the computer, other programmable device or other device to produce a computer-implemented process, so that the instructions executed on the computer or other programmable device provide procedures for implementing the functions and actions specified herein.

Although specific examples of the present application may be shown, disclosed, and claimed in a particular order of steps, it should be understood that the steps can be performed, separated or combined in any order, unless otherwise indicated.

This specification uses examples to disclose the present application, including the best mode, and to enable those skilled in the art to practice the present application, including making and using any device or system and performing any of the methods disclosed. The patentable scope of the present application is defined by the claims, and may include other examples that are apparent to those skilled in the art.

## Claims

1. A fire control cabinet (100), comprising: an openable and closable control cabinet body (110) and a local control unit (120) disposed inside the control cabinet body, wherein the local control unit is configured to store fire control data in a cloud or acquire fire control data from a cloud by using a mobile communication terminal;
wherein the local control unit comprises a wireless communication module (121) for transmission of the fire control data via the mobile communication terminal;
**characterised in that** the wireless communication module (121) is associated with a cabinet door (111) of the control cabinet body (110), wherein the wireless communication module works normally when the cabinet door is in an open position, and the wireless communication module stops working when the cabinet door is in a closed position; and
**in that** the cabinet door is associated with a switch in a power supply circuit of the wireless communication module, wherein the switch turns on the power supply circuit when the cabinet door is in open position, and the switch disconnects the power supply circuit when the cabinet door is in closed position.

2. The fire control cabinet according to claim 1, wherein the fire control data comprises an equipment type, equipment code, and equipment location of alarm equipment (300) and/or fire-fighting equipment.

3. The fire control cabinet according to any preceding claim, wherein the wireless communication module (121) comprises a Bluetooth module and/or a WIFI module.

4. The fire control cabinet according to any preceding claim, wherein a communication process of the wireless communication module (121) is encrypted by using an AES-CCM algorithm.

5. The fire control cabinet according to any preceding claim, wherein the wireless communication module establishes a connection with the mobile communication terminal after verification using a TOTP token algorithm.

6. The fire control cabinet according to any preceding claim, wherein the fire control data interacted between the local control unit (120) and the cloud as well as the mobile communication terminal is encrypted by using an TLS-128 algorithm.

7. A fire control system (200), comprising:
a cloud (210) configured to upload and download fire control data that has been configured;
a mobile communication terminal (220) configured to upload and download the fire control data from the cloud; and
a fire control cabinet (100) as claimed in any preceding claim.

8. The fire control system according to claim 7, wherein the fire control data uploaded to the cloud is encrypted by using an AES-128 algorithm and is signed with a micro ECC digital signature.

9. The fire control system according to claim 7 or 8, wherein the cloud (210) authenticates the mobile communication terminal (220) by using a phone number.

10. The fire control system according to claim 9, wherein the cloud has an abnormal detection module configured to define the mobile communication terminal as abnormal when the phone number corresponding to the mobile communication terminal changes.

## Patentansprüche

1. Feuerkontrollschrank (100), Folgendes umfassend: einen öffen- und schließbaren Kontrollschrankkörper (110) und eine lokale Kontrolleinheit (120), die innerhalb des Kontrollschrankkörpers angeordnet ist, wobei die lokale Kontrolleinheit konfiguriert ist, um Feuerkontrolldaten in einer Cloud zu speichern oder Feuerkontrolldaten aus einer Cloud unter Verwendung eines mobilen Kommunikationsendgeräts zu erfassen;
wobei die lokale Kontrolleinheit ein drahtloses Kommunikationsmodul (121) zum Übertragen der Feuerkontrolldaten über das mobile Kommunikationsendgerät umfasst;
**dadurch gekennzeichnet, dass** das drahtlose Kommunikationsmodul (121) einer Schranktür (111) des Kontrollschrankkörpers (110) zugeordnet ist, wobei das drahtlose Kommunikationsmodul normal arbeitet, wenn sich die Schranktür in einer geöffneten Position befindet, und das drahtlose Kommunikationsmodul aufhört zu arbeiten, wenn sich die Schranktür in einer geschlossenen Position befindet; und
dass die Schranktür einem Schalter in einem Stromversorgungskreis des drahtlosen Kommunikationsmoduls zugeordnet ist, wobei der Schalter den Stromversorgungskreis einschaltet, wenn sich die Schranktür in der geöffneten Position befindet, und der Schalter den Stromversorgungskreis trennt, wenn sich die Schranktür in der geschlossenen Position befindet.

2. Feuerkontrollschrank nach Anspruch 1, wobei die Feuerkontrolldaten einen Einrichtungstyp, einen Einrichtungscode und einen Einrichtungsort von Alarmeinrichtung (300) und/oder Brandbekämpfungseinrichtung umfassen.

3. Feuerkontrollschrank nach einem der vorhergehenden Ansprüche, wobei das drahtlose Kommunikationsmodul (121) ein Bluetooth-Modul und/oder ein WIFI-Modul umfasst.

4. Feuerkontrollschrank nach einem der vorhergehenden Ansprüche, wobei ein Kommunikationsprozess des drahtlosen Kommunikationsmoduls (121) unter Verwendung eines AES-CCM-Algorithmus verschlüsselt ist.

5. Feuerkontrollschrank nach einem der vorhergehenden Ansprüche, wobei das drahtlose Kommunikationsmodul eine Verbindung mit dem mobilen Kommunikationsendgerät nach einer Überprüfung unter Verwendung eines TOTP-Token-Algorithmus herstellt.

6. Feuerkontrollschrank nach einem der vorhergehenden Ansprüche, wobei die Feuerkontrolldaten, die zwischen der lokalen Kontrolleinheit (120) und der Cloud sowie dem mobilen Kommunikationsendgerät interagieren, unter Verwendung eines TLS-128-Algorithmus verschlüsselt sind.

7. Feuerkontrollsystem (200), Folgendes umfassend:
eine Cloud (210), die konfiguriert ist, um Feuerkontrolldaten hochzuladen und herunterzuladen, die konfiguriert worden sind;
ein mobiles Kommunikationsendgerät (220), das konfiguriert ist, um die Feuerkontrolldaten hochzuladen und von der Cloud herunterzuladen; und
ein Feuerkontrollschrank (100) nach einem der vorhergehenden Ansprüche.

8. Feuerkontrollsystem nach Anspruch 7, wobei die in die Cloud hochgeladenen Feuerkontrolldaten unter Verwendung eines AES-128-Algorithmus verschlüsselt und mit einer digitalen Mikro-ECC-Signatur signiert sind.

9. Feuerkontrollsystem nach Anspruch 7 oder 8, wobei die Cloud (210) das mobile Kommunikationsendgerät (220) unter Verwendung einer Telefonnummer authentifiziert.

10. Feuerkontrollsystem nach Anspruch 9, wobei die Cloud ein Modul zum Erfassen von Anomalien aufweist, das konfiguriert ist, um das mobile Kommunikationsendgerät als anomal zu definieren, wenn sich die dem mobilen Kommunikationsendgerät entsprechende Telefonnummer ändert.

## Revendications

1. Cabinet de contrôle des incendies (100), comprenant : un corps de cabinet de contrôle ouvrable et refermable (110) et une unité de contrôle locale (120) disposée à l'intérieur du corps de cabinet de contrôle, dans lequel l'unité de contrôle locale est configurée pour stocker des données de contrôle des incendies dans un stockage en nuage ou acquérir des données de contrôle des incendies à partir d'un stockage en nuage à l'aide d'un terminal de communication mobile ;
dans lequel l'unité de contrôle locale comprend un module de communication sans fil (121) pour la transmission des données de contrôle des incendies via le terminal de communication mobile ;
**caractérisé en ce que** le module de communication sans fil (121) est associé à une porte de cabinet (111) du corps de cabinet de contrôle (110), dans lequel le module de communication sans fil fonctionne normalement lorsque la porte de cabinet est en position ouverte, et le module de communication sans fil cesse de fonctionner lorsque la porte de cabinet est en position fermée ; et
**en ce que** la porte de cabinet est associée à un commutateur dans un circuit d'alimentation électrique du module de communication sans fil, dans lequel le commutateur allume le circuit d'alimentation électrique lorsque la porte de cabinet est en position ouverte, et l'interrupteur déconnecte le circuit d'alimentation électrique lorsque la porte de cabinet est en position fermée.

2. Cabinet de contrôle des incendies selon la revendication 1, dans lequel les données de contrôle des incendies comprennent un type d'équipement, un code d'équipement, et un emplacement d'équipement d'un équipement d'alarme (300) et/ou d'un équipement de lutte contre les incendies.

3. Cabinet de contrôle des incendies selon une quelconque revendication précédente, dans lequel le module de communication sans fil (121) comprend un module Bluetooth et/ou un module WIFI.

4. Cabinet de contrôle des incendies selon une quelconque revendication précédente, dans lequel un processus de communication du module de communication sans fil (121) est chiffré à l'aide un algorithme AES-CCM.

5. Cabinet de contrôle des incendies selon une quelconque revendication précédente, dans lequel le module de communication sans fil établit une connexion avec le terminal de communication mobile après vérification à l'aide d'un algorithme de jeton TOTP.

6. Cabinet de contrôle des incendies selon une quelconque revendication précédente, dans lequel les données de contrôle des incendies interagissant entre l'unité de contrôle locale (120) et le stockage en nuage ainsi que le terminal de communication mobile est chiffrée à l'aide d'un algorithme TLS-128.

7. Système de contrôle des incendies (200), comprenant :
un stockage en nuage (210) configuré pour téléverser et télécharger des données de contrôle des incendies qui ont été configurées ;
un terminal de communication mobile (220) configuré pour téléverser et télécharger les données de contrôle des incendies depuis le stockage en nuage ; et
un cabinet de contrôle des incendies (100) selon une quelconque revendication précédente.

8. Système de contrôle des incendies selon la revendication 7, dans lequel les données de contrôle des incendies téléversées dans le stockage en nuage sont chiffrées à l'aide d'un algorithme AES-128 et signées avec une signature numérique micro-ECC.

9. Système de lutte contre l'incendie selon la revendication 7 ou 8, dans lequel le stockage en nuage (210) authentifie le terminal de communication mobile (220) à l'aide d'un numéro de téléphone.

10. Système de contrôle des incendies selon la revendication 9, dans lequel le stockage en nuage présente un module de détection d'anomalie configuré pour définir le terminal de communication mobile comme anormal lorsque le numéro de téléphone correspondant au terminal de communication mobile change.
